# FASCICULE DE BREVET EUROPEEN

(11) **EP 3 055 159 B1**
(45) Date de publication et mention de la délivrance du brevet: **03.01.2018**
(21) Numéro de dépôt: 14780535.2
(22) Date de dépôt: 08.09.2014
(51) Int. Cl.: B60K 25/00, B60K 25/06, B60K 17/02, B60K 6/383, B60K 6/387, F16H 3/00, B60K 6/48

(54) **GROUPE MOTOPROPULSEUR POUR VÉHICULE AUTOMOBILE ET PROCÉDÉ DE FONCTIONNEMENT**
ANTRIEBSSTRANG FÜR EIN KRAFTFAHRZEUG UND STEUERUNGSVERFAHREN
VEHICULAR POWERTRAIN AND CONTROL METHOD

(30) Priorité: 10.10.2013 FR 1359854
(43) Date de publication de la demande: 17.08.2016
(73) Titulaire: Technoboost, 75116 Paris (FR)
(72) Inventeur: MIRANDA, Paulo, F-94290 Villeneuve le Roi (FR); SABRIE, Julien, F-75013 Paris (FR); CAUBET, Roland, F-92210 St Cloud (FR)
(74) Mandataire: Rosenberg, Muriel Sylvie
(86) Numéro de dépôt international: PCT/FR2014/052208
(87) Numéro de publication internationale: WO 2015/052389

(56) Documents cités:
- DE-A1- 10 035 431
- DE-A1-102006 036 758
- FR-A1- 2 822 758
- FR-A1- 2 975 047

## Description

La présente invention concerne un groupe motopropulseur pour un véhicule automobile, ainsi que des procédés de fonctionnement de ce groupe motopropulseur, et un véhicule automobile comportant un tel groupe motopropulseur.

D'une manière habituelle les véhicules automobiles comprennent des machines tournantes accessoires comme un alternateur, une pompe de direction assistée ou un compresseur de climatisation, qui sont entraînées directement par le moteur thermique. On assure ainsi la production d'électricité pour le réseau de bord ou le refroidissement de l'habitacle, lorsque le moteur thermique est en marche.

Cependant pour les véhicules hybrides disposant d'une motorisation auxiliaire pouvant entraîner seul le véhicule, si le stockage d'énergie auxiliaire comporte une capacité assez importante pour assurer un roulage pendant longtemps avec le moteur thermique arrêté, les machines tournantes accessoires sont aussi à l'arrêt, et leurs fonctions comme la recharge de la batterie du réseau de bord ou la production de froid ne sont plus assurées. Il y a alors des risques d'inconfort ou de défaillance.

En particulier certains véhicules hybrides peuvent dans des parcours urbains comporter des temps d'arrêt du moteur thermique qui dépassent la moitié du temps de roulage total.

On peut alors augmenter la puissance des machines tournantes ou des réserves qui leurs sont liées, pour supporter un temps d'arrêt de ces machines plus long sans inconvénient. Mais dans ce cas on augmente les dimensions et la masse de ces équipements, ainsi que leurs coûts.

On peut aussi redémarrer le moteur thermique pour entraîner les machines tournantes, mais ces démarrages supplémentaires réduisent la performance énergétique du groupe motopropulseur.

En variante on peut entraîner une machine tournante accessoire comme un compresseur de climatisation, par un moteur électrique prélevant l'énergie dans la batterie du réseau de bord, ou dans les batteries haute tension utilisées pour la traction dans le cas d'un véhicule hybride électrique.

Cependant cette solution comporte un coût élevé, et induit des contraintes importantes sur les batteries qui l'alimentent. De plus le rendement est médiocre, avec plusieurs transformations d'énergie successives pour entraîner cette machine accessoire.

Une autre variante consiste à entraîner la machine accessoire directement par les roues du véhicule. Toutefois cette disposition empêche le fonctionnement de ces machines quand le véhicule est à l'arrêt.

En variante un type de groupe motopropulseur connu pour un véhicule hybride, présenté notamment par le document FR-A1-2977197, comporte un moteur thermique entraînant directement par une roue-libre, l'arbre primaire d'une boîte de vitesses qui est reliée aux roues motrices du véhicule.

L'arbre primaire de la boîte de vitesses est lié de manière permanente à une machine électrique de traction, ainsi qu'à des machines tournantes accessoires, comme un compresseur de climatisation.

On obtient ainsi un roulage avec le moteur thermique entraînant la boîte de vitesses par la roue-libre qui est engagée quand ce moteur développe un couple de traction, ou un désengagement automatique de la roue-libre quand on arrête le moteur thermique, le véhicule continuant à rouler avec la machine électrique assurant seule la traction.

Cependant ce type de groupe motopropulseur nécessite une roue-libre qui étant débrayée automatiquement dans un sens, ne permet pas des fonctions comme l'utilisation d'un frein moteur pour freiner le véhicule dans des descentes car cette roue-libre se désengage, ce qui n'assure pas la sécurité.

De plus la machine électrique de traction ainsi que les machines accessoires étant reliées en permanence à l'arbre primaire de la boîte de vitesses, il donne à cet arbre une inertie élevée qui permet difficilement de synchroniser sa vitesse, pour engager des nouveaux rapports dans le cas d'une boîte de vitesses robotisée à simple ou à double embrayage.

Le document DE 10 2006 036758 A1 divulgue le préambule de la revendication 1.

La présente invention a notamment pour but d'éviter ces inconvénients de la technique antérieure.

Elle propose à cet effet un groupe motopropulseur pour véhicule automobile conforme à la revendication 1.

Un avantage de ce groupe motopropulseur est qu'on peut réaliser un roulage avec le moteur thermique arrêté, le véhicule roulant sur son élan dans le cas d'un véhicule conventionnel, ou étant motorisé par une machine de traction auxiliaire dans le cas d'un véhicule hybride, avec les machines complémentaires qui sont toujours entraînées par les roues du véhicule en laissant un rapport de la boîte de vitesses engagé.

De plus lors de l'arrêt du véhicule, on peut entraîner les machines complémentaires en laissant la boîte de vitesses au point mort, et en fermant un embrayage d'entrée ainsi que l'embrayage de liaison. On notera que la synchronisation de l'arbre primaire lors d'un changement de rapport, peut se faire facilement en ouvrant l'embrayage de liaison pour retirer l'inertie des machines complémentaires.

Le groupe motopropulseur selon l'invention peut de plus comporter une ou plusieurs des caractéristiques suivantes, qui peuvent être combinées entre elles.

Avantageusement, les machines tournantes accessoires sont disposées parallèlement au moteur thermique, et comportent une transmission disposée après l'embrayage de liaison, les reliant aux arbres primaires.

L'invention a aussi pour objet un procédé de fonctionnement pour un groupe motopropulseur comprenant l'une quelconque des caractéristiques précédentes, qui pendant un changement de rapport mettant en oeuvre un moyen de synchronisation ajustant la vitesse d'un arbre primaire, ouvre l'embrayage de liaison.

L'invention a aussi pour objet un autre procédé de fonctionnement pour un groupe motopropulseur comprenant l'une quelconque des caractéristiques précédentes, qui le moteur thermique étant arrêté, fait rouler le véhicule sur son propre élan, ou avec une traction par une machine auxiliaire dans le cas d'un véhicule hybride, l'entraînement des machines accessoires étant assuré en engageant un rapport de vitesse et en fermant l'embrayage de liaison, tout en laissant l'embrayage d'entrée ouvert.

L'invention a de plus pour objet un véhicule automobile disposant d'un groupe motopropulseur assurant la traction, qui comporte l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma d'un groupe motopropulseur qui n'est pas conforme à la revendication 1, comprenant une boîte de vitesses pilotée à simple embrayage ;
- la figure 2 est un schéma de ce groupe motopropulseur suivant une variante qui n'est pas conforme à la revendication 1
- la figure 3 est un schéma d'un groupe motopropulseur qui n'est pas conforme à la revendication 1, comprenant une boîte de vitesses à double embrayage ;
- la figure 4 est un schéma de ce groupe motopropulseur suivant une première variante qui n'est pas conforme à la revendication 1 ; et
- la figure 5 est un schéma de ce groupe motopropulseur suivant une deuxième variante, conforme à la revendication 1.

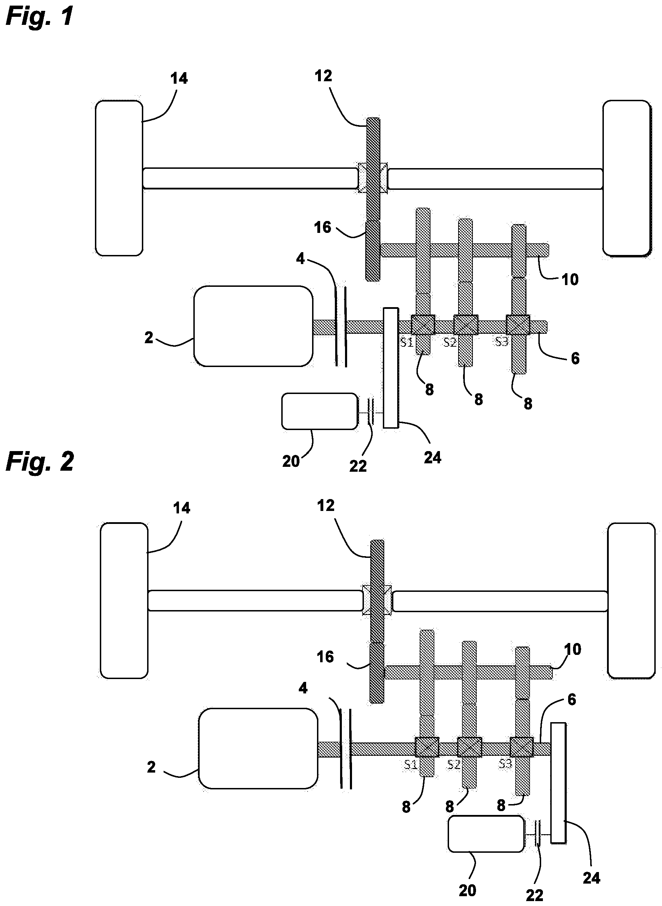

La figure 1 présente un groupe motopropulseur pour un véhicule, comprenant un moteur thermique 2 entraînant par un embrayage d'entrée 4 l'arbre primaire 6 d'une boîte de vitesses comportant différents rapports 8 qui entraînent à leur tour l'arbre secondaire de la boîte de vitesses 10.

Chaque rapport 8 disposant d'un couple de pignons, comporte un pignon monté libre sur son arbre, et un dispositif de synchronisation de la vitesse de l'arbre primaire 6 permettant d'ajuster la vitesse de cet arbre, puis d'engager ce rapport en bloquant ce pignon sur son arbre.

L'arbre secondaire 10 comporte à son extrémité un pignon 16 en prise avec la couronne d'un différentiel 12, qui répartit le mouvement vers les deux roues motrices 14.

Le groupe motopropulseur comporte une machine accessoire 20 disposée parallèlement au moteur thermique 2, comprenant un embrayage de liaison 22 entraînant directement par une transmission 24 l'arbre primaire 6. La transmission 24 pouvant comporter une chaîne, une courroie ou des pignons, est reliée au côté avant de l'arbre primaire 6, qui se trouve entre les rapports de vitesse 8 et l'embrayage d'entrée 4.

La boîte de vitesses est pilotée de manière automatique, elle dispose d'actionneurs commandés par un calculateur, qui agissent sur l'embrayage d'entrée 4, sur les dispositifs d'engagement des rapports de vitesse 8 et sur l'embrayage de liaison 22, pour effectuer de manière automatique les changements de rapport et l'entraînement de la machine accessoire 20.

La figure 2 présente en variante un groupe motopropulseur similaire, comprenant la transmission 24 reliant la machine accessoire 20 à l'arbre primaire 6, qui se trouve à l'extrémité arrière de cet arbre.

D'une manière générale le groupe motopropulseur peut comporter une ou plusieurs machines accessoires 20 reliées à l'arbre primaire 6 de la même manière, avec un ou plusieurs embrayages de liaison 22. Le groupe motopropulseur peut comporter en complément une machine auxiliaire de traction pour réaliser un véhicule hybride, qui peut par exemple entraîner directement des roues du véhicule.

Suivant la machine accessoire 20 il faut assurer la sécurité de fonctionnement du véhicule, notamment dans le cas d'un alternateur de charge de la batterie du réseau de bord, ou le confort dans le cas d'un compresseur de climatisation, avec des temps d'arrêt limités de cette machine.

Le fonctionnement du groupe motopropulseur est le suivant quand le moteur thermique 2 est en marche.

Lors du roulage du véhicule un rapport de vitesse 8 est engagé, l'embrayage d'entrée 4 est fermé et l'arbre primaire 6 tourne, on entraîne la machine accessoire 20 en fermant son embrayage de liaison 22. Lors de l'arrêt du véhicule aucun rapport de vitesse 8 n'est engagé, on maintient le moteur thermique 2 en marche en laissant l'embrayage d'entrée 6 fermé, et on entraîne aussi la machine accessoire 20 par son embrayage de liaison 22.

Le moteur thermique 2 étant arrêté, le véhicule peut rouler sur son propre élan, ou avec une traction par la machine auxiliaire dans le cas d'un véhicule hybride. L'entraînement de la machine accessoire 20 se fait en engageant un rapport de vitesse 8 et en fermant l'embrayage de liaison 22, tout en laissant ouvert l'embrayage d'entrée 4. On peut en particulier ajuster la vitesse de rotation de la machine accessoire 20 suivant la vitesse du véhicule, en choisissant le rapport de vitesse 8 qui est engagé.

On réalise ainsi dans tout les cas pour ces différents modes de fonctionnement un entraînement de la machine accessoire 20, qui assure notamment la sécurité s'il s'agit d'un alternateur alimentant la batterie du réseau de bord, ou d'une pompe de direction assistée, ou le confort s'il s'agit d'un compresseur de climatisation.

Les passages transitoires entre ces différents modes de fonctionnement sont effectués de la manière suivante.

Le moteur thermique 2 étant en marche, quand le véhicule s'arrête en dessous d'un seuil de vitesse de ce véhicule on ouvre l'embrayage d'entrée 4. La machine accessoire 20 s'arrête en même temps que le véhicule. On peut alors si cet arrêt se prolonge mettre la boîte de vitesses au point mort, et redémarrer le moteur thermique 2 comme présenté ci-dessus.

A l'inverse pour démarrer le véhicule avec le moteur thermique 2 en marche, suivant le cas on ouvre l'embrayage d'entrée 4 et on engage un rapport 8 de la boîte de vitesses. Si le moteur thermique 2 entraînait la machine accessoire 20, alors cette machine s'arrête. Puis on démarre le véhicule avec la fermeture progressive de l'embrayage d'entrée 4.

Suivant que l'on ouvre ou ferme l'embrayage de liaison 22 pendant ce démarrage du véhicule, on a alors une machine accessoire 20 qui reste arrêtée, ou une mise en rotation progressive de cette machine en même temps que le décollage du véhicule.

Si le moteur thermique 2 était en marche pour entraîner la machine accessoire 20 pendant l'arrêt du véhicule, et que l'on entraîne à nouveau cette machine pendant le démarrage du véhicule, on a alors un temps d'arrêt très court de la machine qui ne nuit pas au confort ainsi qu'à la sécurité de fonctionnement.

Dans le cas d'un véhicule arrêté et du moteur thermique 2 à l'arrêt, si l'on doit entraîner la machine accessoire 20, il faut alors mettre la boîte de vitesses au point mort si ce n'est pas le cas, puis démarrer ce moteur thermique avec l'embrayage d'entrée 4 ou l'embrayage de liaison 22 ouvert, puis enfin fermer ces deux embrayages. Ces opérations peuvent se faire dans un temps très court.

Dans le cas d'un véhicule roulant avec le moteur thermique 2 entraînant ce véhicule par un rapport de vitesse 8, ainsi que la machine accessoire 20, si l'on doit arrêter ce moteur, on ouvre l'embrayage d'entrée 4 et on arrête le moteur thermique en laissant le rapport de vitesse engagé, ce qui maintient en permanence la rotation de la machine accessoire.

A l'inverse dans le cas d'un véhicule roulant avec le moteur thermique 2 arrêté, la machine accessoire 20 étant entraînée par un rapport de vitesse 8, il suffit de démarrer ce moteur puis de fermer l'embrayage d'entrée 4 pour motoriser le véhicule avec le moteur thermique.

Ensuite pour changer le rapport 8 de la boîte de vitesses, il faut simultanément ouvrir l'embrayage d'entrée 4, et si nécessaire l'embrayage de liaison 22 afin de réduire l'inertie de l'arbre primaire 6, puis changer le rapport de vitesse, et enfin refermer ces deux embrayages. On a alors un temps d'arrêt de la machine accessoire 20 qui est très court.

On notera que les équipements du véhicule liés à la machine accessoire 20, doivent être dimensionnés pour supporter des courts moments d'arrêt tout en assurant la sécurité de fonctionnement ou le confort.

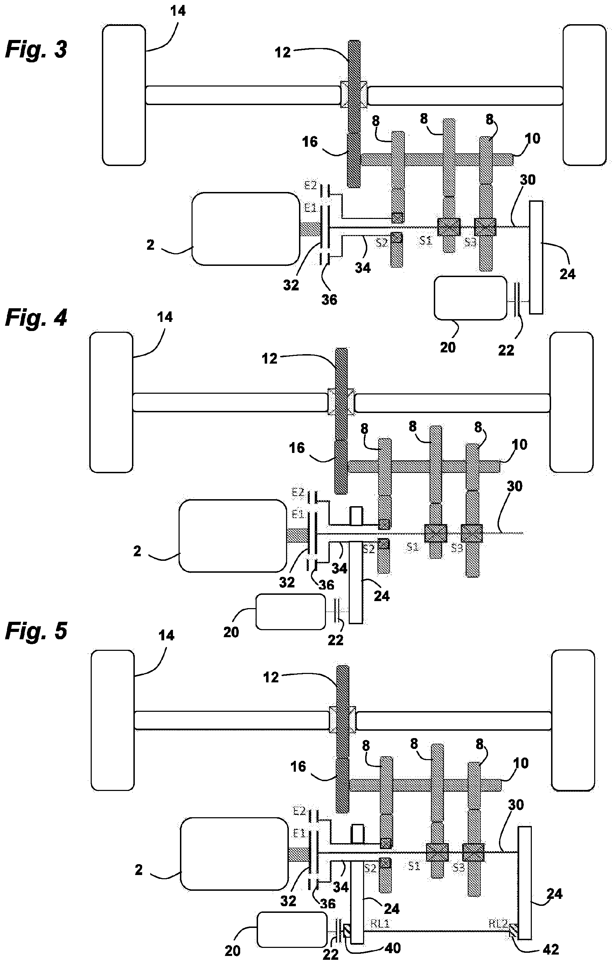

La figure 3 présente une boîte de vitesses à double embrayage, comprenant un arbre primaire intérieur 30 relié au moteur thermique 2 par un embrayage d'entrée intérieur 32, et un arbre primaire extérieur 34 relié à ce moteur par un embrayage d'entrée extérieur 36. Chaque arbre d'entrée 30, 34 comporte des rapports de vitesse 8 le reliant à l'arbre secondaire 10, qui sont dans l'ordre alternativement disposés sur l'un ou l'autre de ces arbres.

La machine accessoire 20 est reliée par son embrayage de liaison 22 à l'arbre primaire intérieur 30, en passant par la transmission 24 qui se trouve du côté arrière de cet arbre primaire intérieur.

La figure 4 présente une boîte de vitesses à double embrayage similaire, la machine accessoire 20 étant reliée à l'arbre primaire extérieur 34 en passant par la transmission 24 qui se trouve du côté avant des rapports de vitesse 8.

Pour ces deux dernières figures, la boîte de vitesses à double embrayage permet lors des changements de rapports de vitesse 8 une traction continue du véhicule par le moteur thermique 2. Le rapport d'un des arbres primaires 30, 34 étant engagé avec son embrayage d'entrée 32, 36 fermé, le rapport suivant de l'autre arbre primaire est engagé en maintenant son embrayage ouvert, puis on bascule le couple d'un embrayage à l'autre pour assurer une continuité de traction du véhicule.

L'entraînement de la machine accessoire 24 peut se faire aussi quasiment en permanence.

Si le véhicule roule avec un rapport de vitesse 8 engagé correspondant à l'arbre primaire lié à la machine accessoire 20, il suffit alors de fermer l'embrayage de liaison 22 pour entraîner cette machine.

Si le véhicule roule avec un rapport de vitesse 8 engagé correspondant à l'autre arbre primaire qui n'est pas lié à la machine accessoire 20, on peut alors en parallèle engager un rapport de vitesse de ce premier arbre en laissant son embrayage d'entrée ouvert, puis fermer l'embrayage de liaison 22 pour entraîner la machine accessoire.

Dans ce cas avec le moteur thermique 2 tournant, pour entraîner la machine accessoire 20 de préférence on engage le rapport de vitesse immédiatement supérieur ou inférieur suivant que la vitesse de ce moteur est respectivement élevée ou faible, pour préparer une montée ou une descente de rapport. On obtient ainsi une présélection du rapport suivant, qui permet de l'engager rapidement si nécessaire.

En variante on peut ne pas engager de rapport de vitesse sur l'arbre primaire lié à la machine accessoire 20, et se contenter de fermer l'embrayage d'entrée de cet arbre ainsi que l'embrayage de liaison 22 pour entraîner la machine accessoire.

On a aussi pour ce groupe motopropulseur comprenant une boîte de vitesses à double embrayage, des temps d'arrêt de la machine accessoire 20 qui peuvent être très court.

La figure 5 présente une machine accessoire 20 lié après un embrayage de liaison 22, à la fois à l'arbre primaire extérieur 34 par une première roue-libre 40 en série avec une première transmission 24, et à l'arbre primaire intérieur 30 par une deuxième roue-libre 42 en série avec une deuxième transmission 24. Les deux roues-libres 40 sont disposées de manière à entraîner la machine accessoire 20 à partir des arbres primaires 30,34.

On assure ainsi avec les deux roues-libres 40, 42, l'entraînement de la machine accessoire 20 à partir de l'arbre primaire 30, 34 qui tourne à la plus grande vitesse, la roue-libre de l'autre arbre primaire étant automatiquement désengagée. Pendant les changements de rapport en passant d'un arbre primaire à l'autre, on assure aussi automatiquement en même temps l'entraînement de la machine accessoire 20 par l'un ou l'autre de ces arbres primaires.

Le groupe motopropulseur suivant l'invention permet en particulier sur un véhicule hybride, d'utiliser un unique alternateur pour alimenter le réseau de bord en courant électrique, qui fonctionne quels que soient les modes de fonctionnement de ce groupe. On évite ainsi l'utilisation de deux alternateurs, entraînés l'un par le moteur thermique et l'autre par les roues motrices. On peut aussi entraîner en permanence un compresseur de climatisation, en évitant l'emploi d'un moteur électrique spécifique pour son usage.

Le groupe motopropulseur permet de plus sur un véhicule conventionnel d'effectuer un roulage en bénéficiant de l'élan de ce véhicule, tout en assurant le fonctionnement des accessoires par un entraînement permanent de la machine accessoire 20.

D'une manière générale on peut réduire les masses, et améliorer le rendement de fonctionnement du moteur thermique et des différents accessoires.

## Revendications

1. Groupe motopropulseur pour véhicule automobile, comprenant une boîte de vitesses entraînant les roues motrices (14), disposant de deux arbres primaires (30, 34) reliés au moteur thermique (2) chacun par un embrayage d'entrée (32, 36), chaque arbre primaire présentant des moyens de synchronisation ajustant la vitesse de cet arbre avant d'engager un rapport (8), le groupe motopropulseur comprenant de plus une ou plusieurs machines tournantes accessoires (20) qui sont reliées par un embrayage de liaison (22) aux arbres primaires (30, 34) de la boîte de vitesses, la boîte de vitesses étant du type à double embrayage, les deux arbres primaires (30, 34) étant disposés de manière concentrique, ledit groupe motopropulseur étant **caractérisé en ce que** la ou les machines tournantes accessoires (20) sont reliées aux deux arbres primaires (30, 34) par des roues-libres (40, 42).

2. Groupe motopropulseur selon la revendication 1, **caractérisé en ce que** la ou les machines tournantes accessoires (20) sont disposées parallèlement au moteur thermique (2), et comportent une transmission (24) disposée après l'embrayage de liaison (22), les reliant aux arbres primaires (30, 34).

3. Procédé de fonctionnement pour un groupe motopropulseur selon l'une quelconque des revendications précédentes, **caractérisé en ce que** pendant un changement de rapport mettant en oeuvre un moyen de synchronisation ajustant la vitesse d'un arbre primaire (30, 34), il ouvre l'embrayage de liaison (22).

4. Procédé selon la revendication 3, **caractérisé en ce que** le moteur thermique (2) étant arrêté, il fait rouler le véhicule sur son propre élan, ou avec une traction par une machine auxiliaire dans le cas d'un véhicule hybride, l'entraînement de la ou des machines accessoires (20) étant assuré en engageant un rapport de vitesse (8) et en fermant l'embrayage de liaison (22), tout en laissant l'embrayage d'entrée (32, 36) ouvert.

5. Véhicule automobile disposant d'un groupe motopropulseur assurant la traction, **caractérisé en ce que** ce groupe motopropulseur est réalisé suivant la revendication 1 ou 2.

## Patentansprüche

1. Antriebsstrang für Kraftfahrzeug, der ein Schaltgetriebe umfasst, das die Antriebsräder (14) antreibt, der über zwei Hauptwellen (30, 34) verfügt, die mit der Brennkraftmaschine (2) jeweils durch eine Eingangskupplung (32, 36) verbunden sind, wobei jede Hauptwelle Synchronisationsmittel aufweist, die die Drehzahl dieser Welle anpassen, bevor ein Gang (8) eingerückt wird, wobei der Antriebsstrang außerdem eine oder mehrere rotierende Zusatzmaschinen (20) umfasst, die durch eine Verbindungskupplung (22) mit den Hauptwellen (30, 34) des Schaltgetriebes verbunden sind, wobei das Schaltgetriebe des Typs mit doppelter Kupplung ist, wobei die zwei Hauptwellen (30, 34) konzentrisch angeordnet sind, Antriebsstrang **dadurch gekennzeichnet, dass** die rotierende Zusatzmaschine(n) (20) mit den zwei Hauptwellen (30, 34) durch Freilaufräder (40, 42) verbunden ist/sind.

2. Antriebsstrang nach Anspruch 1, **dadurch gekennzeichnet, dass** die rotierende(n) Zusatzmaschine(n) (20) parallel zu der Brennkraftmaschine (2) angeordnet ist/sind und eine Kraftübertragung (24) umfasst/umfassen, die nach der Verbindungskupplung (22) angeordnet ist, die sie mit den Hauptwellen (30, 34) verbindet.

3. Betriebsverfahren für einen Antriebsstrang nach einem der vorhergehenden Ansprüche, **dadurch gekennzeichnet, dass** während eines Gangwechsels, der ein Synchronisationsmittel umsetzt, das die Drehzahl einer Hauptwelle (30, 34) anpasst, die Verbindungskupplung (22) geöffnet wird.

4. Verfahren nach Anspruch 3, **dadurch gekennzeichnet, dass** die Brennkraftmaschine (2), wenn sie gestoppt ist, das Fahrzeug durch seinen eigenen Schwung fahren lässt oder mit einer Traktion durch eine Hilfsmaschine in dem Fall eines Hybridfahrzeugs, wobei der Antrieb der Zusatzmaschine(n) (20) durch Einrücken eines Gangs (8) und Schließen der Verbindungskupplung (22) sichergestellt wird, während die Eingangskupplung (32, 36) offen bleibt.

5. Kraftfahrzeug, das über einen Antriebsstrang verfügt, der die Traktion sicherstellt, **dadurch gekennzeichnet, dass** dieser Antriebsstrang nach Anspruch 1 oder 2 hergestellt ist.

## Claims

1. A powertrain for a motor vehicle, including a gearbox driving the driven wheels (14), having two primary shafts (30, 34) each connected to the heat engine (2) by an input clutch (32, 36), each primary shaft having synchronisation means adjusting the speed of this shaft before engaging a gear (8), the powertrain including in addition one or more accessory rotary machines (20) which are connected by a connecting clutch (22) to the primary shafts (30, 34) of the gearbox, the gearbox being of the dual clutch type, the two primary shafts (30, 34) being disposed concentrically, said powertrain being **characterized in that** the accessory rotary machine(s) (20) are connected to the two primary shafts (30, 34) by free wheels (40, 42).

2. The powertrain according to Claim 1, **characterized in that** the accessory rotary machine(s) (20) are disposed parallel to the heat engine (2), and comprise a transmission (24) disposed after the connecting clutch (22), connecting them to the primary shafts (30, 34).

3. An operating method for a powertrain according to any one of the preceding claims, **characterized in that** during a change of gear implementing a synchronisation means adjusting the speed of a primary shaft (30, 34) it opens the connecting clutch (22).

4. The method according to Claim 3, **characterized in that**, the heat engine (2) being stopped, it causes the vehicle to run on its own momentum, or with a traction by an auxiliary machine in the case of a hybrid vehicle, the driving of the accessory machine(s) (20) being ensured by engaging a gear (8) and by closing the connecting clutch (22), whilst leaving the input clutch (32, 36) open.

5. A motor vehicle having a powertrain ensuring the traction, **characterized in that** this powertrain is realized according to Claim 1 or 2.
